# EUROPÄISCHE PATENTANMELDUNG

(11) **EP 2 426 546 A1**
(43) Veröffentlichungstag der Anmeldung: **07.03.2012**
(21) Anmeldenummer: 10175082.6
(22) Anmeldetag: 02.09.2010
(51) Int. Cl.: G02C 5/12, G02C 3/00, G02C 5/14

(54) **Brillengestell**

(71) Anmelder: Sulentic, Darko, 58636 Iserlohn (DE)
(72) Erfinder: Sulentic, Darko, 58636 Iserlohn (DE)
(74) Vertreter: Albrecht, Dirk

(57) **Zusammenfassung**

Brillengestell mit einer Fassung, zwei Ohrbügeln, wenigstens einem Nasensteg und Aussparungen, die zur Fixierung des Brillengestells im Haar ausgebildet sind, wobei die Aussparungen in Form von Vertiefungen ausgebildet sind, die im getragenen Zustand des Brillengestells an der für den Betrachter des Brillenträgers sichtbaren Brillengestellau-βenseite geschlossen sind.

## Beschreibung

Die vorliegende Erfindung betrifft ein Brillengestell mit einer Fassung, zwei Ohrbügeln, wenigstens einem Nasensteg und Aussparungen, die zur Fixierung des Brillengestells im Haar ausgebildet sind.

Ein derartiges Brillengestell ist beispielsweise aus der DE-U-200 16 093 bekannt. Zur Fixierung des Brillengestells im Haar sind an den Ohrbügeln Kammabschnitte mit integrierten Zacken ausgebildet, die durch Aussparungen in Form länglicher durchgehender Schlitze voneinander getrennt sind. Wird das Brillengestell ins Haar geschoben, so verklammern sich die Zacken der Kammabschnitte im Haar und erschweren auf diese Weise ein versehentliches Herunterfallen des Brillengestells. Ein Nachteil des in der DE-U-200 16 093 beschriebenen Brillengestells besteht darin, dass die an den Ohrbügel vorgesehenen Kammabschnitte das äußere Erscheinungsbild des Brillengestells stark beeinträchtigen. Darüber hinaus wird durch die Kammabschnitte nur ein schwacher Halt im Haar erzielt. Ferner stellen die nach außen vorstehenden Zacken eine Gefahrenquelle dar.

Ausgehend von diesem Stand der Technik ist es eine Aufgabe der vorliegenden Erfindung, ein Brillengestell der eingangs genannten Art zu schaffen, das sicher im ins Haar geschobenen Zustand im Haar des Brillenträgers fixierbar ist und darüber hinaus ein gutes äußeres Erscheinungsbild aufweist.

Zur Lösung dieser Aufgabe schafft die vorliegende Erfindung ein Brillengestell der eingangs genannten Art, das dadurch gekennzeichnet ist, dass die Aussparungen in Form von Vertiefungen ausgebildet sind, die im getragenen Zustand des Brillengestells an der für den Betrachter des Brillenträgers sichtbaren Brillengestellaußenseite geschlossen sind.

Aufgrund der Tatsache, dass die in Form von Vertiefungen ausgebildeten Aussparungen zur Fixierung des Brillengestells im Haar zur von außen sichtbaren Brillengestellaußenseite geschlossen ausgebildet sind, sind diese für einen Betrachter des Brillenträgers nicht oder kaum sichtbar, weshalb sie das äußere Erscheinungsbild des Brillengestells nicht beeinträchtigen. Darüber hinaus haben sich derartig ausgebildete Vertiefungen als besonders wirksame Fixierungsmittel erwiesen, die ein versehentliches Herunterfallen des Brillengestells sicher verhindern.

Gemäß einer Ausgestaltung der vorliegenden Erfindung sind die Vertiefungen als im Wesentlichen längliche Nuten ausgebildet, die im ins Haar geschobenen Zustand des Brillengestells die Haare des Brillenträgers aufnehmen.

Bevorzugt sind die Vertiefungen im Wesentlichen gradlinig oder V-förmig ausgebildet, da bei derart ausgestalteten Vertiefungen eine sehr gute Fixierung im Haar festgestellt werden konnte.

Vorteilhaft ist ein Endbereich der Vertiefungen bogenförmig ausgebildet. In einem solchen bogenförmig ausgebildeten Endbereich verklammern sich die Haare besonders effektiv.

Gemäß einer Ausgestaltung der vorliegenden Erfindung weisen die Vertiefungen Hinterschneidungen auf und sind insbesondere schwalbenschwanzförmig ausgebildet. Derartige Hinterschneidungen bilden zusätzliche Verklammerungsmittel zur Fixierung des Brillengestells im Haar.

Gemäß einer Ausgestaltung der vorliegenden Erfindung sind Vertiefungen an den Ohrbügeln vorgesehen und erstrecken sich im Wesentlichen quer zur Haupterstreckungsrichtung der Ohrbügel.

Alternativ oder zusätzlich können Vertiefungen an einem unteren Rand der Fassung vorgesehen sein, die sich quer zur Haupterstreckungsrichtung des Fassungsrandes erstrecken.

Gemäß einem weiteren Aspekt der vorliegenden Erfindung sind Vertiefungen an dem wenigstens einen Nasensteg vorgesehen. Die Nasenstege können entweder direkt an die Fassung angeformt oder als separate Bauteile an dieser befestigt sein, wodurch sie Teil des Brillengestells werden.

Bevorzugt erstrecken sich zumindest die offenen Endbereiche der an dem wenigstens einen Nasensteg vorgesehenen Vertiefungen in einem Winkel im Bereich von 40 bis 90° zur Haupterstreckungsrichtung des Nasenstegs. Mit derart angewinkelten Vertiefungen wurde bei unterschiedlichsten Haarfrisuren eine sehr gute Verklammerungswirkung in den Haaren erzielt.

Gemäß noch einer weiteren Ausgestaltung der vorliegenden Erfindung sind Vertiefungen an einem mantelartig ausgebildeten, über den wenigstens einen Nasensteg gestülpten Nasenstegüberzug vorgesehen, der insbesondere aus Silikon, Gummi, Kunststoff oder dergleichen hergestellt ist. Mit Hilfe solcher Nasenstegüberzüge können insbesondere Brillengestelle, die keinerlei Aussparungen zur Fixierung des Brillengestells im Haar aufweisen, nachträglich mit solchen versehen werden.

Ferner schafft die vorliegende Erfindung zur Lösung der eingangs genannten Aufgabe einen mantelartig ausgebildeten Nasenstegüberzug zum Stülpen über einen Nasensteg eines Brillengestells, wobei der Nasenstegüberzug mit Vertiefungen zur Fixierung des Brillengestells im Haar versehen ist, insbesondere mit Vertiefungen, die bei ordnungsgemäß angeordnetem Nasenstegüberzug und im getragenen Zustand des Brillengestells an der für den Betrachter des Brillenträgers sichtbaren Brillengestellaußenseite geschlossen sind.

Gemäß einer erfindungsgemäßen Ausgestaltung ist der Nasenstegüberzug aus Silikon, Gummi, einem bevorzugt elastischen Kunststoff oder einem ähnlich elastischen Material hergestellt.

Ebenso wie die Vertiefungen des Nasenstegs können sich auch die Vertiefungen des Nasenstegüberzugs in einem Winkel im Bereich von 40 bis 90° zur Haupterstreckungsrichtung des Nasenstegüberzugs erstrecken, womit die zuvor genannten Vorteile erzielt werden.

Weitere Merkmale und Vorteile der vorliegenden Erfindung werden anhand der nachfolgenden Beschreibung verschiedener Ausführungsformen erfindungsgemäßer Brillengestelle oder Komponenten derselben unter Bezugnahme auf die beiliegende Zeichnung beschrieben. Darin ist
- **Figur 1**: eine schematische perspektivische Ansicht eines Brillengestells gemäß einer ersten Ausführungsform der vorliegenden Erfindung;
- **Figur 2**: eine schematische perspektivische Teilansicht eines Brillengestells gemäß einer zweiten Ausführungsform der vorliegenden Erfindung;
- **Figur 3**: eine schematische perspektivische Ansicht eines Brillengestells gemäß einer dritten Ausführungsform der vorliegenden Erfindung;
- **Figur 4**: eine schematische perspektivische Ansicht eines Nasenstegs gemäß einer alternativen Ausgestaltung der vorliegenden Erfindung;
- **Figur 5**: eine weitere schematische perspektivische Ansicht des in Figur 4 dargestellten Nasenstegs;
- **Figur 6**: eine schematische perspektivische Ansicht eines Nasenstegs gemäß einer weiteren alternativen Ausgestaltung der vorliegenden Erfindung;
- **Figur 7**: eine weitere schematische perspektivische Ansicht des in Figur 6 dargestellten Nasenstegs;
- **Figur 8**: eine schematische perspektivische Ansicht eines Nasenstegs gemäß noch einer weiteren Ausgestaltung der vorliegenden Erfindung;
- **Figur 9**: eine schematische perspektivische Ansicht eines Nasenstegs gemäß einer vierten Ausgestaltung der vorliegenden Erfindung;
- **Figur 10**: eine schematische perspektivische Ansicht eines Nasenstegüberzugs gemäß einer Ausgestaltung der vorliegenden Erfindung und
- **Figur 11**: eine weitere schematische perspektivische Ansicht des in Figur 10 dargestellten Nasenstegüberzugs.

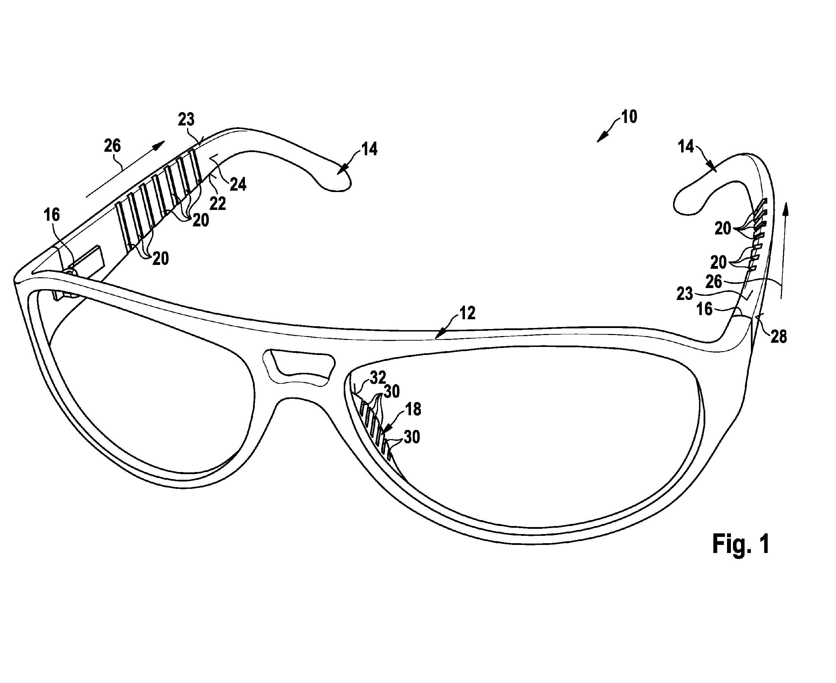

Figur 1 zeigt ein Brillengestell 10 gemäß einer ersten Ausführungsform der vorliegenden Erfindung, bei dem es sich um ein Sonnenbrillengestell handelt. Das Brillengestell 10 umfasst eine Fassung 12 zur Aufnahme nicht näher dargestellter Brillengläser, zwei Ohrbügel 14, die über entsprechende Gelenkverbindungen 16 schwenkbar an der Fassung 12 gehalten sind, und zwei Nasenstege 18, die an die Fassung 12 angeformt und somit einteilig mit dieser hergestellt sind. An den Ohrbügeln 14 sind jeweils mehrere Vertiefungen 20 vorgesehen, die zur Fixierung des Brillengestells 10 im Haar eines Brillenträgers ausgebildet sind. Bei den Vertiefungen 20 handelt es sich jeweils um längliche, sich geradlinig erstreckende schwalbenschwanzförmige Nuten, die durchgängig von der Ohrbügelunterseite 22 zur Ohrbügeloberseite 23 in die Ohrbügelinnenseite 24 quer zur Haupterstreckungsrichtung des Ohrbügels 14 eingebracht sind, die durch den Pfeil 26 repräsentiert wird. Entsprechend sind die Vertiefungen 20 im getragenen Zustand des Brillengestells 10 an der für den Betrachter des Brillenträgers sichtbaren Brillengestellaußenseite 28 geschlossen. Alternativ können die Vertiefungen 20 auch einen bogenförmigen Verlauf aufweisen.

Weitere Vertiefungen 30 sind jeweils an den Nasenstegen 18 ausgebildet. Bei den Vertiefungen 30 handelt es sich um gradlinige Einschnitte, die ausgehend von dem Innenrand 32 der Nasenstege 18 in Richtung der Fassung 12 eingebracht sind. Im getragenen Zustand des Brillengestells 10 werden die Vertiefungen 30 für den Betrachter bei frontaler Sicht auf den Brillenträger durch die Fassung 12 verdeckt. Aus der in Figur 1 dargestellten Perspektive sind die Vertiefungen 30 aufgrund der dunklen Brillengläser nicht oder nur sehr schlecht erkennbar.

Wird das Brillengestell 10 von einem Brillenträger ins Haar geschwenkt, so gelangen einzelne Haare in die in den Ohrbügeln 14 und an den Nasenstegen 18 ausgebildeten Vertiefungen 20 und 30 und verklammern sich in diesem, so dass ein versehentliches Herunterfallen des Brillengestelles 10 wirksam verhindert wird.

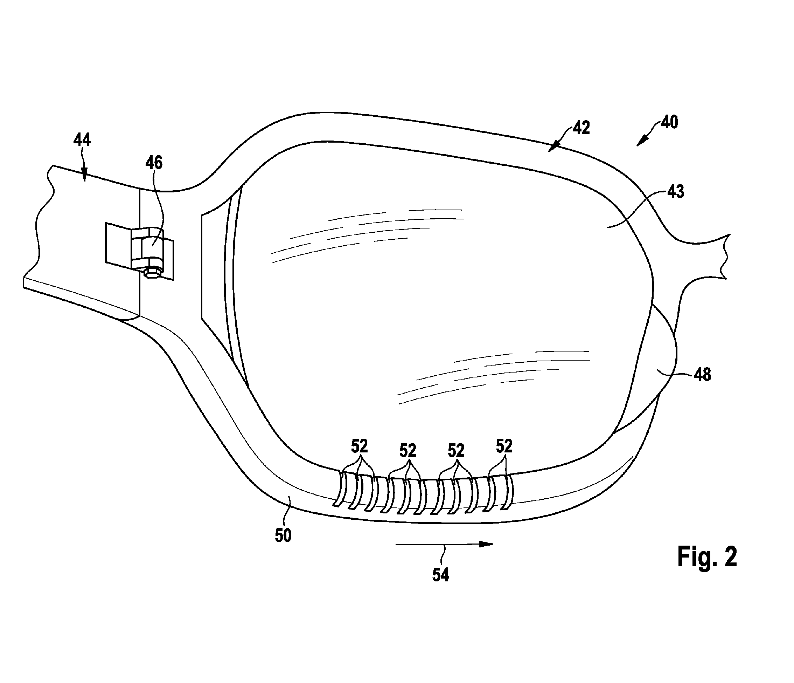

Figur 2 zeigt eine Teilansicht eines Brillengestells 40 gemäß einer zweiten Ausführungsform der vorliegenden Erfindung, bei dem es sich ebenfalls um ein Sonnenbrillengestell handelt. Das Brillengestell 40 umfasst eine Fassung 42 zur Aufnahme der Brillengläser 43, zwei Ohrbügel 44, die über entsprechende Gelenkverbindungen 46 schwenkbar an der Fassung 42 gehalten sind, und zwei Nasenstege 48, die an die Fassung 42 angeformt und somit einteilig mit dieser hergestellt sind. Am unteren Rand 50 der Fassung 42 sind jeweils eine Vielzahl von Vertiefungen 52 ausgebildet, die zur Fixierung des Brillengestells 40 im Haar eines Brillenträgers dienen. Bei den Vertiefungen 52 handelt es sich jeweils um gradlinige Nuten, die sich im VVesentlichen quer zur durch den Pfeil 54 gekennzeichneten Haupterstreckungsrichtung der Fassungsrandes 50 erstrecken.

Wird das Brillengestell 40 von einem Brillenträger ins Haar geschwenkt, so nehmen die Vertiefungen 52 einzelne Haare bzw. Haarbüschel auf, die sich in diesen verklammern, wodurch ein sicherer Halt des Brillengestells 40 im Haar gewährleistet ist.

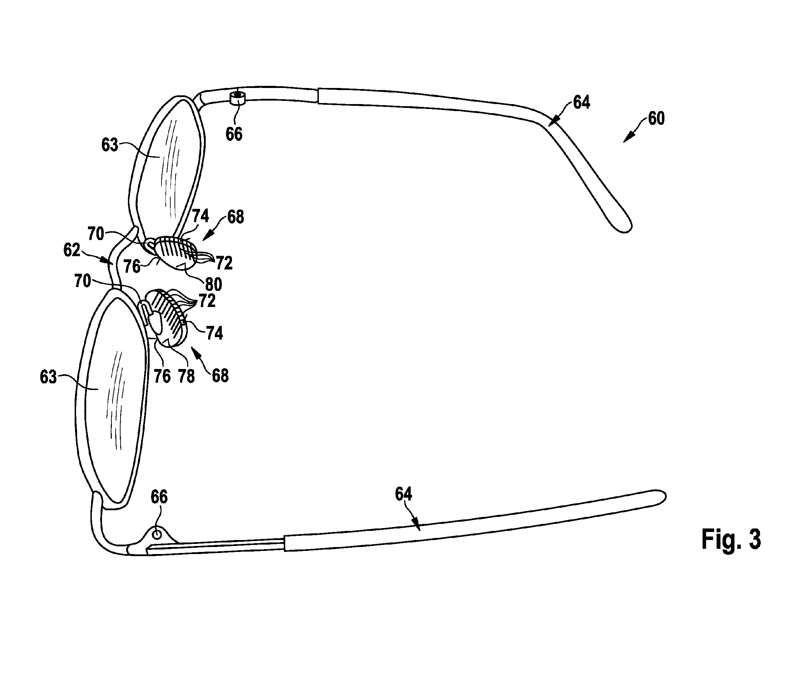

Figur 3 zeigt ein Brillengestell 60 gemäß einer dritten Ausführungsform der vorliegenden Erfindung, bei dem es sich um ein Lesebrillengestell handelt. Das Brillengestell 60 umfasst eine Fassung 62 zur Aufnahme der Brillengläser 63, zwei Ohrbügel 64, die über entsprechende Gelenkverbindungen 66 schwenkbar an der Fassung 62 gehalten sind, und zwei Nasenstege 68. Bei den Nasenstegen 68 handelt es sich um separate Bauteile aus Silikon, Gummi, Kunststoff oder dergleichen, die über Bügel 70 an der Fassung 62 befestigt sind und auf diese Weise mit dem Brillengestell 60 eine Einheit bilden. Die beiden Nasenstege 68 umfassen jeweils eine Vielzahl von Vertiefungen 72, die zur Fixierung des Brillengestells 60 im Haar eines Brillenträgers dienen. Die Vertiefungen 72 sind in Form von Schlitzen vorgesehen, die sich ausgehend von der hinteren Nasenstegstirnseite 74 in Richtung der vorderen Nasenstegstirnseite 76 erstrecken, so dass sie sowohl die Nasenstegvorderseite 78 als auch die Nasenstegrückseite 80 durchdringen. Mit anderen Worten sind die Vertiefungen 72 an der vorderen Nasenstegstirnseite 76 geschlossen ausgebildet. Im getragenen Zustand des Brillengestells 60 sind die Vertiefungen 72 durch die Fassung 62 und/oder durch die vordere Nasenstegstirnseite 76 verdeckt, so dass diese das Gesamterscheinungsbild des Brillengestells 60 nicht beeinträchtigen. Wird das Brillengestell 60 vom Brillenträger ins Haar geschwenkt, so werden einzelne

Haare oder Haarbüschel in die in den Nasenstegen 68 ausgebildeten Vertiefungen 72 eingeführt und in diesen verklammert, so dass ein sicherer Halt des Brillengestells 60 im Haar gewährleistet ist.

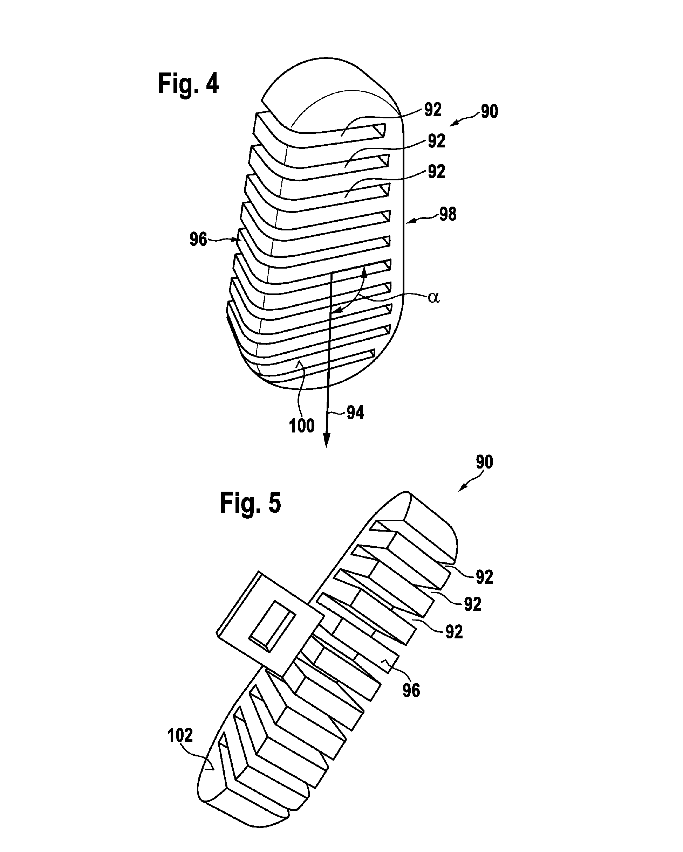

Die Figuren 4 bis 9 zeigen alternative Ausgestaltungen von Nasenstegen, die anstelle der in Figur 3 dargestellten Nasenstege 68 verwendet werden können.

Die Figuren 4 und 5 zeigen einen Nasensteg 90 gemäß einer ersten Ausgestaltung der vorliegenden Erfindung. Der Nasensteg 90, der beispielsweise aus Silikon, Gummi, Kunststoff oder dergleichen hergestellt sein kann, umfasst eine Vielzahl von im Wesentlichen parallel zueinander angeordneten Vertiefungen 92, die sich quer zur Hauptserstreckungsrichtung des Nasenstegs erstrecken, die durch den Pfeil 94 repräsentiert wird. Genauer gesagt erstrecken sich die Vertiefungen 92 in einem Winkel α von 90° zur Haupterstreckungsrichtung des Nasensteges 90. Die Vertiefungen 92 sind in Form von Schlitzen vorgesehen, die sich ausgehend von der hinteren Nasenstegstirnseite 96 in Richtung der vorderen Nasenstegstirnseite 98 durchgehend zwischen der Nasenstegvorderseite 100 und der Nasenstegrückseite 102 erstrecken, also zur vorderen Nasenstegstirnseite 98 geschlossen sind.

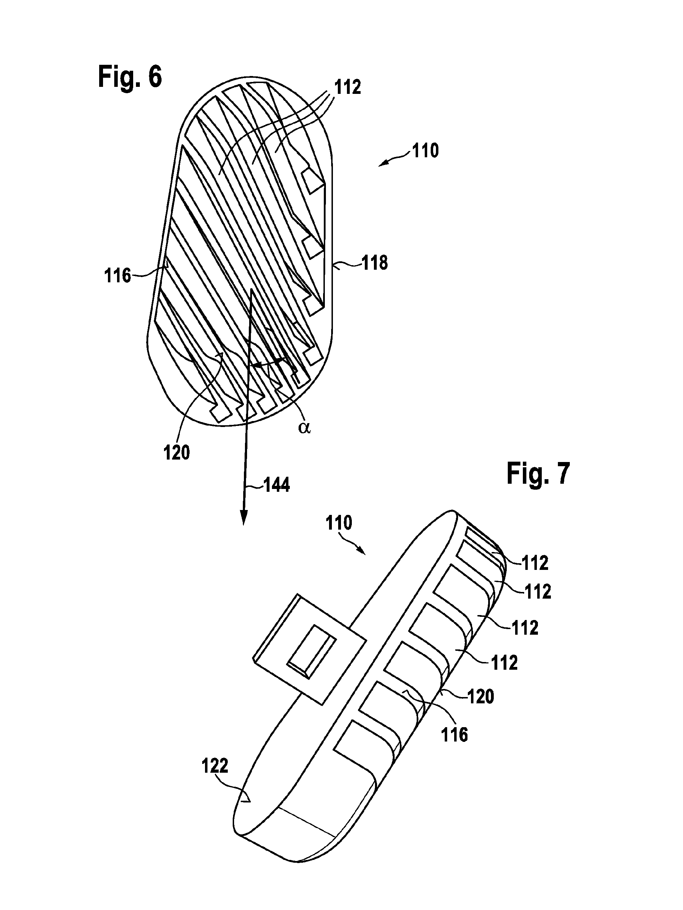

Die Figuren 6 und 7 zeigen einen Nasensteg 110 gemäß einer weiteren Ausgestaltung der vorliegenden Erfindung, der beispielsweise aus Silikon hergestellt ist. der Nasensteg 110, der aus Silikon, Gummi, Kunststoff oder dergleichen hergestellt sein kann, umfasst eine Mehrzahl von sich im Wesentlichen parallel zueinander erstreckenden Vertiefungen 112, die jeweils als gradlinige Nuten ausgebildet sind. Die Vertiefungen 112 erstrecken sich quer zur durch den Pfeil 114 gekennzeichneten Haupterstreckungsrichtung des Nasensteges 110, genauer gesagt in einem Winkel α von etwa 45° zur Haupterstrekkungsrichtung 114 des Nasensteges 110. Die nutförmigen Vertiefungen 112 sind jeweils ausgehend von der hinteren Nasenstegstirnseite 116 in Richtung der vordern Nasenstegstirnseite 118 ausgebildet, wobei die einzelnen Vertiefungen 112 an der Nasenstegvorderseite 120 offen und an der Nasenstegrückseite 122 geschlossen sind. Die in den Figuren 6 und 7 dargestellte, zur Haupterstreckungsrichtung 114 des Nasensteges 112 winklig angestellte Anordnung der Vertiefungen 112 hat sich dahingehend bewährt, dass ein besonders guter Halt im Haar des Brillenträgers erzielt wird.

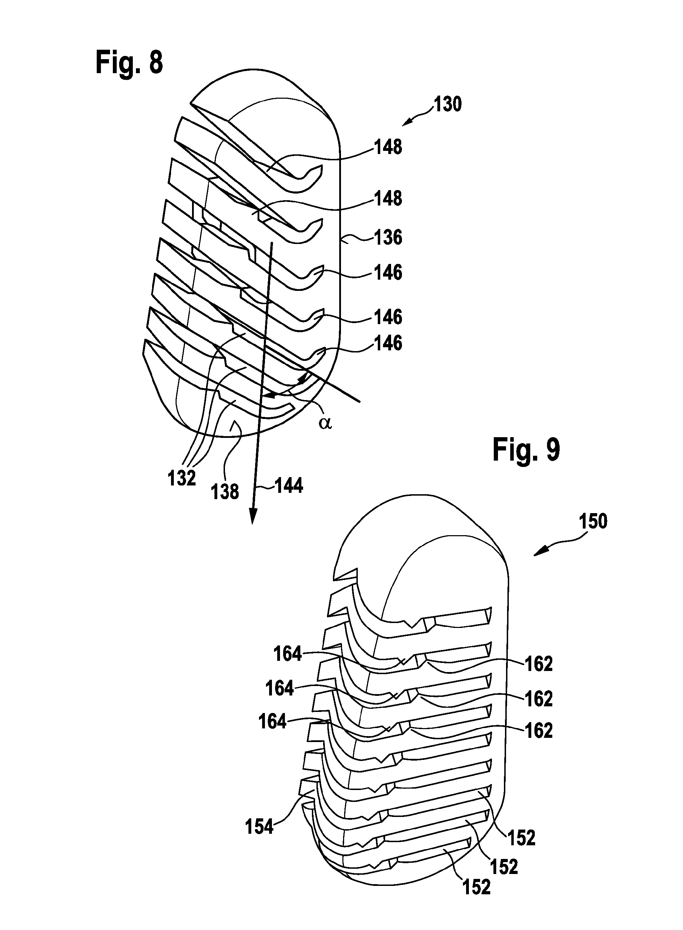

Figur 8 zeigt einen Nasensteg 130 gemäß einer dritten Ausgestaltung der vorliegenden Erfindung, der beispielsweise aus Silikon, Gummi, Kunststoff oder dergleichen hergestellt ist. Der Nasensteg 130 umfasst eine Vielzahl im Wesentlichen parallel zueinander angeordneter Vertiefungen 132. Die Vertiefungen 132 sind schlitzartig ausgebildet und erstrecken sich jeweils ausgehend von der hinteren Nasenstegstirnseite 134 in Richtung der vorderen Nasenstegstirnseite 136 durchgehend zwischen der Nasenstegvorderseite 138 und der Nasenstegrückseite. Jede Vertiefung 132 umfasst einen sich gradlinig erstreckenden Anfangsbereich 142, der in Bezug auf eine durch den Pfeil 144 gekennzeichnete Haupterstreckungsrichtung des Nasensteges 130 in etwa in einem Winkel α von 45° angeordnet ist und einen sich an den Anfangsbereich 142 anschließenden bogenförmigen Endbereich 146. Ferner sind Hinterschneidungen in Form von Vorsprüngen 148 vorgesehen, die in die Anfangsbereiche 142 jeder Vertiefung 132 vorstehen. Sowohl die bogenförmigen Endbereiche 146 der Vertiefungen 132 als auch die in die Vertiefungen 132 vorstehenden Vorsprünge 148 verbessern die Verklammerung von Haaren in den Vertiefungen 132.

Figur 9 zeigt einen Nasensteg 150 gemäß einer vierten Ausgestaltung der vorliegenden Erfindung, der beispielsweise aus Silikon, Gummi, Kunststoff oder dergleichen hergestellt sein kann. Der Nasensteg 150 umfasst eine Vielzahl von Vertiefungen 152, die schlitzartig ausgebildet und im Wesentlichen parallel zueinander positioniert sind. Die Vertiefungen 152 erstrecken sich ausgehend von der hinteren Nasenstegstirnseite 154 in Richtung der vorderen Nasenstegstirnseite 156 durchgehend zwischen der Nasenstegvorderseite 158 und der Nasenstegrückseite, so dass sie zur vorderen Nasenstegstirnseite 156 geschlossen sind. Blickt man auf die hintere Nasenstegstirnseite 154, so weisen die Vertiefungen 132 jeweils eine V-Form auf. Ferner sind Hinterschneidungen in Form von versetzt zueinander und einander gegenüberliegend angeordneten Vorsprüngen 162 und 164 vorgesehen, die jeweils in die Vertiefungen 152 vorstehen. Sowohl die V-förmige Ausgestaltung der Vertiefungen 152 als auch die versetzt zueinander angeordneten und in die Vertiefungen 152 vorstehenden Vorsprünge 162 und 164 verbessern die Verklammerungswirkung von Haaren in den Vertiefungen 152.

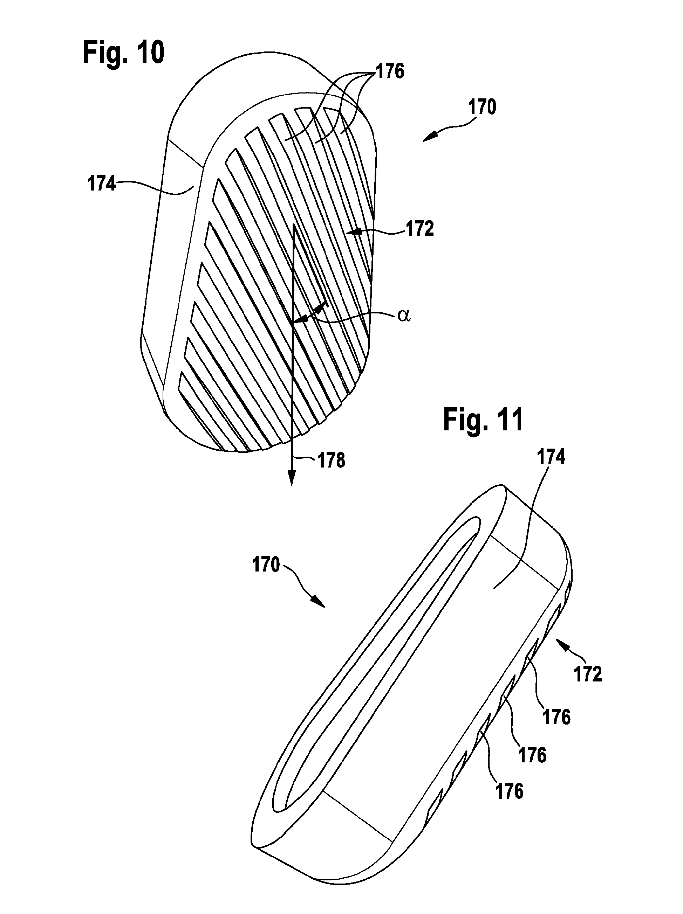

Die Figuren 10 und 11 zeigen einen Nasenstegüberzug 170 gemäß einer Ausführungsform der vorliegenden Erfindung, der aus Silikon oder einem ähnlich elastischen Material hergestellt ist und über einen herkömmlichen Nasensteg eines Brillengestells gestülpt werden kann. Der Nasenstegüberzug 170 weist eine Vorderseite 172 und einen mit dieser verbundenen ringförmigen Rand 174 auf, der einen Hohlraum zur Aufnahme eines Nasenstegs definiert. An der Vorderseite 172 des Nasenstegüberzuges 170 sind mehre nutförmige Vertiefungen 176 ausgebildet, die sich in Bezug auf die durch den Pfeil 178 gekennzeichnete Haupterstreckungsrichtung des Nasenstegüberzugs 170 in etwa in einem Winkel α von etwa 50° erstrecken. Diese Vertiefungen 176 dienen zum Verklammern von Haaren.

Der in den Figuren 10 und 12 dargestellte Nasenstegüberzug 170 ist dahingehend von Vorteil, dass entsprechende Nasenstege aufweisende Brillengestelle auch nachträglich mit einem Mittel zur Fixierung des Brillengestells im Haar des Brillenträgers versehen werden können. Es sollte klar sein, dass durchaus noch weitere Ausführungsformen von Brillengestellen, Nasenstegen und Nasenstegüberzügen denkbar sind, die ebenfalls durch den Schutzbereich der beiliegenden Ansprüche erfasst werden. Insbesondere wird darauf hingewiesen, dass Einzelmerkmale, die in Bezug auf eine Ausführungsform bzw. Ausgestaltung der vorliegenden Erfindung beschrieben wurden, auch mit Einzelmerkmalen einer anderen der zuvor beschriebenen Ausführungsformen bzw. Ausgestaltungen kombiniert werden können.

### Bezugszeichenliste

- 10: Brillengestell
- 12: Fassung
- 14: Ohrbügel
- 16: Gelenkverbindung
- 18: Nasensteg
- 20: Vertiefung
- 22: Ohrbügelunterseite
- 23: Ohrbügeloberseite
- 24: Ohrbügelinnenseite
- 26: Pfeil
- 28: Brillengestellaußenseite
- 30: Vertiefung

- 32: Innenrand
- 40: Brillengestell
- 42: Fassung
- 43: Brillengläser
- 44: Ohrbügel
- 46: Gelenkverbindung
- 48: Nasensteg
- 50: Rand
- 52: Vertiefung
- 54: Pfeil

- 60: Brillengestell
- 62: Fassung

- 63: Brillenglas
- 64: Ohrbügel
- 66: Gelenverbindung
- 68: Nasensteg
- 70: Bügel
- 72: Vertiefung
- 74: hintere Nasenstegstirnseite
- 76: vordere Nasenstegstirnseite
- 78: Nasenstegvorderseite
- 80: Nasenstegrückseite

- 90: Nasensteg
- 92: Vertiefung
- 94: Pfeil
- 96: hintere Nasenstegstirnseite
- 98: vordere Nasenstegstirnseite
- 100: Nasenstegvorderseite
- 102: Nasenstegrückseite

- 110: Nasensteg
- 112: Vertiefung
- 114: Pfeil
- 116: hintere Nasenstegstirnseite
- 118: vordere Nasenstegstirnseite
- 120: Nasenstegvorderseite
- 122: Nasenstegrückseite
- 130: Nasensteg
- 132: Vertiefung
- 134: hintere Nasenstegstirnseite
- 136: vordere Nasenstegstirnseite
- 138: Nasenstegvorderseite
- 142: Anfangsbereich
- 144: Pfeil
- 146: Endbereich
- 148: Vorsprung

- 150: Nasensteg
- 152: Vertiefung
- 154: hintere Nasenstegstirnseite
- 156: vordere Nasenstegstirnseite
- 158: Nasenstegvorderseite
- 160: Nasenstegrückseite
- 162: Vorsprung
- 164: Vorsprung

- 170: Nasenstegüberzug
- 172: Vorderseite
- 174: Rand
- 176: Vertiefung
- 178: Pfeil

## Patentansprüche

1. Brillengestell (10; 40; 60) mit einer Fassung (12; 42; 62), zwei Ohrbügeln (14; 44; 64), wenigstens einem Nasensteg (18; 48; 68; 90; 110; 130; 150) und Aussparungen (20, 30; 52; 72; 92; 112; 132; 152; 176) die zur Fixierung des Brillengestells (10; 40; 60) im Haar ausgebildet sind, **dadurch gekennzeichnet, dass** die Aussparungen in Form von Vertiefungen (20, 30; 52; 72; 92; 112; 132; 152; 176) ausgebildet sind, die im getragenen Zustand des Brillengestells (10; 40; 60) an der für den Betrachter des Brillenträgers sichtbaren Brillengestellaußenseite geschlossen sind.

2. Brillengestell (10; 40; 60) nach Anspruch 1, **dadurch gekennzeichnet, dass** die Vertiefungen (20, 30; 52; 72; 92; 112; 132; 152; 176) als im Wesentlichen längliche Nuten ausgebildet sind.

3. Brillengestell (10; 40; 60) nach einem der vorhergehenden Ansprüche, **dadurch gekennzeichnet, dass** die Vertiefungen (20, 30; 52; 72; 92; 112; 132; 152; 176) im Wesentlichen gradlinig oder V-förmig ausgebildet sind.

4. Brillengestell (10; 40; 60) nach einem der vorhergehenden Ansprüche, **dadurch gekennzeichnet, dass** ein Endbereich (146) der Vertiefungen (132) bogenförmig ausgebildet ist.

5. Brillengestell (10; 40; 60) nach einem der vorhergehenden Ansprüche, **dadurch gekennzeichnet, dass** die Vertiefungen (20; 132; 152) Hinterschneidungen (148; 162, 164) aufweisen und insbesondere schwalbenschwanzförmig ausgebildet sind.

6. Brillengestell (10; 40; 60) nach einem der vorhergehenden Ansprüche, **dadurch gekennzeichnet, dass** Vertiefungen (20) an den Ohrbügeln (14) vorgesehen sind und sich im Wesentlichen quer zur Haupterstreckungsrichtung (26) der Ohrbügel (14) erstrecken.

7. Brillengestell (10; 40; 60) nach Anspruch 6, **dadurch gekennzeichnet, dass** Vertiefungen (52) an einem unteren Rand (50) der Fassung (42) vorgesehen sind und sich quer zu dessen Haupterstreckungsrichtung (54) erstrecken.

8. Brillengestell (10; 40; 60) nach einem der vorhergehenden Ansprüche, **dadurch gekennzeichnet, dass** Vertiefungen (30; 72; 92; 112; 132; 152; 176) an dem wenigstens einen Nasensteg (18; 48; 68; 90; 110; 130; 150) vorgesehen sind.

9. Brillengestell(10; 40; 60) nach Anspruch 8, **dadurch gekennzeichnet, dass** sich zumindest die offenen Endbereiche der an dem wenigstens einen Nasensteg (18; 48; 68; 90; 110; 130; 150) vorgesehenen Vertiefungen (30; 52; 72; 92; 112; 132; 152; 176) in einem Winkel (α) im Bereich von 40 bis 90° zur Haupterstreckungsrichtung des Nasenstegs (18; 48; 68; 90; 110; 130; 150) erstrecken.

10. Brillengestell (10; 40; 60) nach einem der vorhergehenden Ansprüche, **dadurch gekennzeichnet, dass** Vertiefungen (176) an einem mantelartigen, über den wenigstens einen Nasensteg gestülpten Nasenstegüberzug (170) ausgebildet sind, der insbesondere aus Silikon, Gummi oder Kunststoff hergestellt ist.

11. Mantelartig ausgebildeter Nasenstegüberzug (170) zum Stülpen über einen Nasensteg eines Brillengestells, wobei der Nasenstegüberzug (170) mit Vertiefungen (176) zur Fixierung des Brillengestells im Haar versehen ist, insbesondere mit Vertiefungen (176), die bei ordnungsgemäß angeordneten Nasenstegüberzug (170) und im getragenen Zustand des Brillengestells an der für den Betrachter des Brillenträgers sichtbaren Brillengestellaußenseite geschlossen sind.

12. Nasenstegüberzug (170) nach Anspruch 11, **dadurch gekennzeichnet, dass** dieser aus Silikon, Gummi oder Kunststoff ausgebildet ist.
